# FASCICULE DE BREVET EUROPEEN

(11) **EP 3 545 654 B1**
(45) Date de publication et mention de la délivrance du brevet: **29.09.2021**
(21) Numéro de dépôt: 17822361.6
(22) Date de dépôt: 22.11.2017
(51) Int. Cl.: H04L 12/58, H04W 4/00

(54) **PROCÉDÉ D'INTERACTION ENTRE UN TERMINAL MOBILE ET UN AUTOMATE COMMUNICANT**
VERFAHREN ZUR INTERAKTION ZWISCHEN EINEM MOBILEN ENDGERÄT UND EINEM KOMMUNIZIERENDEN AUTOMATEN
METHOD FOR INTERACTION BETWEEN A MOBILE TERMINAL AND A COMMUNICATING AUTOMATON

(30) Priorité: 28.11.2016 FR 1661592
(43) Date de publication de la demande: 02.10.2019
(73) Titulaire: ORANGE, 92130 Issy-les-Moulineaux (FR)
(72) Inventeur: LE HUEROU, Emmanuel, 92326 Châtillon Cedex (FR); TOUTAIN, François, 92326 Châtillon Cedex (FR); BEAUFILS, Eric, 92326 Châtillon Cedex (FR); BEGOC BECAM, Nathalie, 92326 Châtillon Cedex (FR)
(86) Numéro de dépôt international: PCT/FR2017/053203
(87) Numéro de publication internationale: WO 2018/096261

(56) Documents cités:
- WO-A1-2015/187048
- US-A1- 2006 046 712

## Description

### Domaine technique

La présente invention se rapporte au domaine des télécommunications et porte plus particulièrement sur un procédé d'interaction avec un automate communicant tel qu'un guichet ou un distributeur automatique.

### Art antérieur

Les communications de type messagerie instantanée connaissent un fort engouement de la part du public depuis quelques années. En effet, ce mode de communication offre plus d'interactivité qu'une communication par courrier électronique tout en étant moins intrusif qu'une communication vocale. Ce type de communication inclut les messages de types SMS (Short Message Service) ou les services de « chat ». L'adoption massive de ce mode de communication et l'arrivée sur le marché de terminaux mobiles à écran tactile s'est accompagnée d'une évolution des interfaces utilisateurs permettant de faciliter ce mode de communication. Ainsi, les interfaces utilisateurs convergent aujourd'hui vers une vue conversationnelle dans laquelle les messages émis et les messages reçus sont présentés dans des bulles disposées de part et d'autre de l'écran du terminal et ordonnées de manière chronologique. A quelques exceptions près, ce type de présentation sous forme de conversation est prédominant sur la plupart des terminaux et des applications de messagerie, toutes marques confondues.

Ce type de communication est à tel point plébiscité qu'il n'est aujourd'hui plus réservé aux échanges entre personnes physiques. En effet, il est possible aujourd'hui d'échanger des messages avec des robots logiciels capables d'interpréter des messages envoyés par des utilisateurs et d'y répondre de manière plus ou moins pertinente. On peut citer par exemple des robots spécialisés dans les prévisions météorologiques capables de répondre à des messages du type « *quel temps fera-t-il demain à Paris ?* ». Ainsi, un utilisateur dispose d'une interface unifiée pour communiquer avec d'autres utilisateurs et accéder à des services. Ce type de robot capable d'interagir avec des utilisateurs en échangeant des messages est parfois appelé «*agent conversationnel*»*.*

L'usage de ce type de communication s'élargi encore aujourd'hui avec l'avènement du «*commerce conversationnel*»*.* Le commerce conversationnel met en oeuvre des robots adaptés pour permettre à des utilisateurs d'effectuer des commandes de biens ou de services. Ainsi, les utilisateurs n'ont plus besoin de télécharger une application dédiée ou d'accéder à un site Web pour passer commande, et le fournisseur de service n'a pas besoin d'éditer et de maintenir une application ou un site Web.

On connait aujourd'hui de nombreux types d'automates qui remplacent peu à peu les guichets traditionnels dans les banques, les gares ou les commerces. On peut citer par exemple les guichets automatiques dans les gares, les caisses de parking, les distributeurs de billets, de boissons et autres friandises, les machines à café ou encore les bornes d'emprunt de vélo ou de véhicules partagés. Certains de ces automates sont connectés à un réseau de communication afin d'accéder par exemple à des bases de données. C'est le cas par exemple des distributeurs automatiques bancaires ou des bornes de réservation de billets en gare. Ces différents automates disposent souvent d'un écran et d'interfaces de saisie permettant à des utilisateurs d'interagir avec l'équipement. Les éléments d'interaction avec l'utilisateur doivent être particulièrement robustes afin de résister à une utilisation parfois intense et aux actes de vandalisme qui pourraient dégrader l'appareil.

Les interfaces utilisateurs sur ce genre d'équipement sont très hétérogènes et sont parfois confuses pour l'utilisateur. Une telle confusion peut accroître le temps passé par un utilisateur pour effectuer un achat et occasionner des files d'attentes.

Il existe donc un besoin pour optimiser l'utilisation de tels automates. Les documents WO2015/187048 et US2006/046712 font partie de l'état de la technique.

### Résumé de l'invention

A cet effet, l'invention concerne un procédé d'interaction entre un terminal mobile et un automate communicant, l'automate communicant comprenant un agent conversationnel adapté pour échanger des messages avec le terminal au travers d'une première interface de communication, le procédé étant caractérisé en ce qu'il comporte :
- obtention d'une information selon laquelle l'automate communicant est à proximité du terminal,
- insertion, dans un carnet d'adresses du terminal, d'une entrée relative audit automate communicant comportant au moins ladite information obtenue, et
- envoi d'au moins un message adapté pour initialiser une interaction entre le terminal et l'automate communicant lorsque l'entrée du carnet d'adresses insérée est sélectionnée.

On entend par interaction l'échange d'un ou plusieurs messages entre le terminal et l'automate communicant. Une interaction est un échange de messages particuliers en ce qu'il provoque un changement d'état interne de l'automate et/ou du terminal. Par exemple, une interaction entre un terminal et un automate communicant peut provoquer la modification d'une base de données interne de l'automate ou encore la modification d'un stock de produits associé à l'automate.

Le procédé permet ainsi de constituer une liste des automates communicants à proximité, proposée à l'utilisateur par exemple sous la forme d'un carnet d'adresses comprenant une entrée pour chacun des automates à proximité. Un utilisateur du terminal peut alors sélectionner une entrée et échanger des messages pour interagir avec l'automate sélectionné. De cette façon, un utilisateur dispose d'une interface unifiée pour interagir avec des automates tels que des distributeurs de billets ou de boissons, des caisses de parking ou tout autre type de guichet automatique. Un utilisateur peut ainsi sélectionner un distributeur de boisson à proximité, commander une boisson en échangeant des messages adaptés, avant de prélever effectivement la boisson auprès du distributeur.

Dans le cadre de cette description, on entend par agent conversationnel un automate adapté pour répondre automatiquement à des messages envoyés par un utilisateur. Un tel agent conversationnel est notamment adapté pour interpréter des commandes ou des mots clefs compris dans des messages qu'il reçoit. En particulier, un tel agent conversationnel peut être configuré pour permettre à un utilisateur de réaliser une transaction en échangeant des messages à partir d'une messagerie instantanée. De tels agents conversationnels sont généralement mis en oeuvre par des programmes informatiques exécutés sur des ordinateurs disposant d'interfaces de communication adaptées pour recevoir et émettre des messages instantanés, tels que des SMS, MMS ou d'autres types de messages conformes au standard RCS.

Un tel agent conversationnel compris dans l'automate permet à l'utilisateur d'interagir avec l'automate en échangeant des messages textuels en langage naturel. Ainsi, l'invention fournit une interface unifiée et maîtrisée par les utilisateurs pour interagir avec des bornes libre-service et autres automates.

Ainsi, l'interaction ayant lieu sur le terminal de l'utilisateur selon des modalités qu'il maîtrise, les files d'attentes aux bornes libre-service s'en trouvent réduites.

Selon un mode particulier de réalisation, le procédé est tel que l'insertion dans le carnet d'adresses est conditionnée par au moins une règle de filtrage configurée au préalable.

Le procédé comporte une étape de filtrage permettant de sélectionner le ou les types d'automates pouvant être insérés dans le carnet d'adresses du terminal. Par exemple, un utilisateur peut configurer une règle de filtrage permettant d'interdire l'insertion de certains types d'automates, comme par exemple les distributeurs de friandises.

Selon une réalisation particulière de l'invention, le procédé est tel que l'interaction entre le terminal et l'automate communicant est une transaction réalisée par l'intermédiaire d'un protocole de messagerie instantanée.

Le procédé selon l'invention permet ainsi la réalisation d'un achat auprès d'un automate à partir d'un terminal mobile. La transaction est réalisée en échangeant des messages conformes à un protocole de messagerie instantanée. Un tel mode de communication est bien connu des utilisateurs et permet d'interagir facilement avec un automate au travers d'une interface unifiée. Lorsque la transaction est réalisée, l'utilisateur peut obtenir le produit ou le service acheté auprès de l'automate en un temps réduit. Une telle transaction peut n'être réalisée qu'en partie. Par exemple, un utilisateur peut débuter la commande d'un billet de train en faisant la queue et poursuivre la commande lorsque l'automate se libère. Il en résulte un gain de temps significatif pour l'utilisateur et un meilleur rendement de l'automate.

Selon un mode de réalisation particulier, le procédé est tel qu'il comprend en outre une étape de confirmation de l'interaction par une action d'un utilisateur du terminal sur l'automate communicant.

Une telle étape de confirmation permet de s'assurer que seul l'utilisateur ayant réalisé la transaction peut obtenir le produit ou le service auprès de l'automate. Pour cela, une fois la transaction réalisée à partir du terminal, l'utilisateur confirme qu'il est bien l'auteur de cette transaction par une interaction sur l'automate. Par exemple, après avoir sélectionné le guichet automatique bancaire le plus proche et commandé le retrait d'une somme d'agent en échangeant des messages adaptés avec cet équipement, un utilisateur confirme cette commande sur le guichet automatique afin d'obtenir l'argent demandé. Le procédé permet ainsi de sécuriser le retrait d'agent.

Selon une réalisation particulière de l'invention, le procédé est tel que l'étape de confirmation comprend l'échange d'une donnée de validation par lecture optique ou NFC.

Un utilisateur du terminal peut ainsi confirmer les actions effectuées à partir du terminal lorsqu'il se présente devant l'automate avec lequel il a interagi. La confirmation est réalisée par l'échange d'une donnée de validation entre le terminal et l'automate. La donnée peut être échangée par un procédé de lecture optique, comme par exemple la lecture d'un code barre ou d'un code à deux dimensions. La donnée peut également être échangée par NFC (Near Field Communication). De tels dispositifs de communication sont de courte portée. De cette façon, la transaction ne peut être confirmée que lorsque l'utilisateur du terminal est à proximité immédiate de l'automate. Un tiers ne peut donc pas subtiliser un produit commandé par l'utilisateur du terminal.

Selon un mode de réalisation particulier, le procédé est tel que l'information selon laquelle l'automate communicant est à proximité du terminal est obtenue par une détection des équipements à portée d'une interface de communication du terminal.

Le terminal détecte les automates à portée d'une interface de communication. Par exemple, le terminal peut obtenir une information selon laquelle un automate communicant est à proximité par réception d'un message de découverte émis par l'automate sur un réseau sans fil auquel le terminal et l'automate sont connectés. Une telle disposition permet d'éviter l'utilisation d'un serveur mémorisant la localisation de chacun des équipements et/ou d'un module de géolocalisation sur le terminal. De cette façon, la localisation absolue des automates n'a pas besoin d'être connue et ceux-ci peuvent être déplacés sans nécessiter de configuration particulière.

Selon un mode particulier de réalisation, le procédé est tel que l'information selon laquelle l'automate communicant est à proximité du terminal est obtenue par la réception d'un premier message envoyé par l'automate, le message étant envoyé lorsque le terminal est à portée d'une interface de communication de l'automate.

De cette façon, l'automate réalise la détection des terminaux à proximité, par exemple à partir d'un message de découverte émis par le terminal sur un réseau sans fil auquel le terminal et l'automate sont connectés. L'automate émet alors un message à destination du terminal afin de l'informer de sa présence. Une telle disposition permet d'éviter l'utilisation d'un serveur mémorisant la localisation de chacun des équipements et/ou d'un module de géolocalisation sur le terminal. De cette façon, la localisation absolue des automates n'a pas besoin d'être connue et ceux-ci peuvent être déplacés sans nécessiter de configuration particulière. D'autre part, la détection étant à l'initiative de l'automate, le terminal n'a pas besoin de rechercher en permanence les automates à proximité. Le procédé permet ainsi d'optimiser la consommation énergétique du terminal.

Selon un mode particulier de réalisation, le procédé est tel que la réception d'une information selon laquelle au moins un automate communicant est à proximité du terminal provoque une notification sur le terminal.

L'utilisateur est averti par une notification lorsqu'un automate communicant est détecté à proximité. Il peut s'agir d'un message affiché sur l'écran du terminal, tel qu'un message promotionnel, associé ou non à une vibration, un son ou tout autre événement susceptible d'attirer l'attention de l'utilisateur sur la présence d'un tel automate. L'utilisateur est ainsi incité à utiliser son terminal pour réaliser au moins une partie d'une interaction avec l'automate. En variante, une telle notification n'est émise que lorsqu'un automate communicant est inséré dans un carnet d'adresses du terminal. De cette façon, l'utilisateur n'est pas dérangé par des notifications concernant des types d'automates pour lesquels une règle de filtrage a été configurée.

Selon un autre aspect, l'invention concerne un dispositif d'interaction entre un terminal mobile et un automate communicant, l'automate communicant comprenant un agent conversationnel adapté pour échanger des messages avec le dispositif au travers d'une première interface de communication, le dispositif étant tel qu'il comporte :
- un module d'obtention adapté pour obtenir une information selon laquelle l'automate communicant est à proximité du terminal,
- un module d'insertion, dans un carnet d'adresses du terminal, d'une entrée relative audit automate communicant comportant au moins ladite information reçue,
- un module de communication adapté pour envoyer au moins un message adapté pour initialiser une interaction entre le terminal et l'automate communicant lorsque l'entrée du carnet d'adresses insérée est sélectionnée.

Selon une réalisation particulière, l'invention concerne un terminal comprenant un dispositif d'interaction tel que décrit ci-dessus.

Dans un mode particulier de réalisation, les différentes étapes du procédé selon l'invention sont déterminées par des instructions de programmes d'ordinateurs.

En conséquence, l'invention vise également un programme d'ordinateur comportant des instructions pour l'exécution des étapes du procédé d'interaction, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes du procédé d'interaction.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé d'interaction tel que défini ci-dessus.

Les terminaux, dispositifs et programmes présentent au moins des avantages analogues à ceux conférés par le procédé d'interaction correspondant.

### Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre une architecture réseau adaptée pour la mise en œuvre de l'invention selon un mode particulier de réalisation,
- La figure 2 illustre sous la forme d'un diagramme les principales étapes du procédé d'interaction selon une réalisation particulière de l'invention, et
- La figure 3a représente, selon un mode de réalisation particulier, un exemple d'affichage d'un carnet d'adresses selon l'invention dans lequel sont insérées des entrées correspondant à des automates connectés à proximité,
- La figure 3b représente des messages échangés entre un automate communicant et un terminal pour effectuer une commande, selon une réalisation particulière de l'invention,
- La figure 4 représente l'architecture simplifiée d'un dispositif d'interaction selon un mode particulier de réalisation.

### Description détaillée

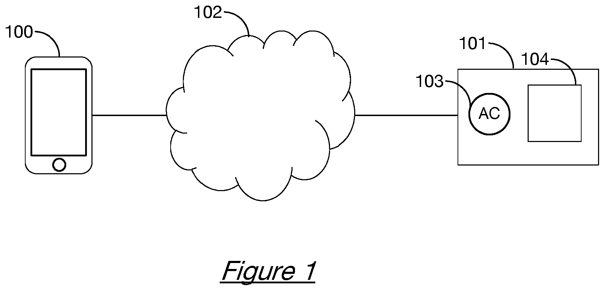

La figure 1 illustre une architecture adaptée pour mettre en œuvre le procédé d'interaction selon un mode particulier de réalisation de l'invention. Une telle architecture comprend un terminal de communication 100 configuré pour communiquer au travers d'un réseau de communication 102 avec un automate communicant 101. Le réseau de communication est par exemple un réseau sans fil de type WiFi ou tout autre type de réseau sans fil, tel qu'un réseau Bluetooth ou un encore un réseau cellulaire.

L'automate communicant 101 est par exemple une machine à café comprenant un agent conversationnel 103 adapté pour envoyer et recevoir des messages conformes à un protocole de messagerie instantanée par l'intermédiaire d'une interface de communication telle qu'une interface WiFi ou une interface réseau cellulaire. Par exemple, la machine à café 101 peut recevoir des SMS émis par le terminal 100 et envoyer des SMS à destination du terminal 100. La machine à café 101 comprend en outre un dispositif de communication de courte portée adapté pour échanger une donnée avec le terminal lorsque ce dernier est à proximité immédiate de l'automate. Il peut s'agir par exemple d'un dispositif de communication optique 104, tel qu'un lecteur ou un afficheur de codes barre ou de codes à deux dimensions, ou encore un dispositif de communication NFC.

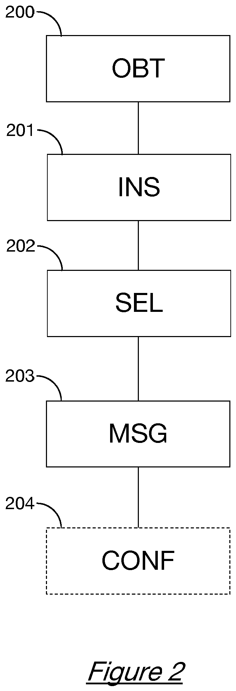

La figure 2 illustre les principales étapes du procédé d'interaction selon un mode particulier de réalisation de l'invention.

Lors d'une première étape 200, le terminal obtient une information selon laquelle un automate communicant est à proximité.

Pour cela, le terminal peut obtenir sa position géographique à partir d'un module GPS (Global Positioning System) ou par un procédé de triangulation GSM ou WiFi, ou par tout autre moyen de géolocalisation. Le terminal peut alors envoyer une requête vers un serveur disposant d'une base de données dans laquelle sont mémorisés les emplacements géographiques d'automates communicant tels que des bornes libre-service, des guichets automatiques ou autres distributeurs. Le serveur peut alors interroger la base de données afin d'obtenir les automates à proximité et envoyer une réponse au terminal. Un tel échange peut être réalisé au moyen d'une requête http émise via une interface réseau du terminal. De cette façon, le terminal obtient une liste des automates communicants à proximité.

La requête émise par le terminal peut en outre comporter un critère de distance à partir duquel le serveur effectue la recherche des automates à proximité. Plus généralement, la requête peut également comporter un contexte du terminal permettant au serveur de déterminer les équipements à proximité du terminal. Un tel contexte peut comporter par exemple une position géographique, une vitesse de déplacement ou encore un mode de locomotion. Ainsi, le serveur peut déterminer les équipements proches du terminal à partir de sa position actuelle et future.

La requête émise par le terminal peut aussi comporter un critère de filtrage relatif à une catégorie d'automates particulière. De cette façon, le terminal peut interdire à des automates de signaler leur présence lorsqu'ils n'appartiennent pas à une catégorie d'équipements indiquée dans la requête. Une telle disposition permet d'éviter que la liste des automates communicants détectés comprenne des entrées jugées inutiles pour l'utilisateur et améliore la visibilité des automates susceptibles d'être utiles à l'utilisateur.

L'information obtenue par le terminal selon laquelle un automate communicant est à proximité comprend un identifiant de communication de l'automate, tel qu'un numéro de téléphone au format E.164, une URI SIP (Uniform Resource Identifier), ou tout autre identifiant permettant d'établir une communication entre le terminal et l'automate, et en particulier d'échanger des messages instantanés. L'information peut en outre comprendre une description des services offerts par l'automate, une ou plusieurs images de présentation du service, une liste de mots clefs et/ou d'expressions acceptées par l'automate, des plages horaires de fonctionnements ou toute autre information descriptive.

Selon un mode particulier de réalisation de l'invention, l'information selon laquelle l'automate communicant est à proximité du terminal est obtenue par une détection des équipements à portée d'une interface de communication du terminal.

La détection d'un automate communicant est réalisée par le terminal. Pour cela, le terminal peut intercepter un message de découverte diffusé par un automate communicant. Par exemple, la machine à café 101 peut diffuser régulièrement sur un réseau WiFi un message signalant sa présence, le message comportant une description du service offert par l'automate et des coordonnées de contact de l'automate. Un tel message peut par exemple être un message conforme au protocole SSDP (Simple Service Discovery Protocol en anglais) permettant à des clients de découvrir des services disponibles sur un réseau. D'autres protocoles permettant à des services ou des dispositifs d'annoncer leur présence sur un réseau peuvent être utilisés. Par exemple des balises iBeacon ou des systèmes Bluetooth peuvent être intégrés à des automates afin qu'ils puissent annoncer leur présence. La portée d'un réseau WiFi étant limitée, les automates communicants détectés sur le réseau sont généralement à proximité. Une telle disposition ne nécessite pas la mise en place d'un serveur centralisé disposant des informations de localisation des différents automates. Ainsi, un automate peut être déplacé sans qu'aucune précision particulière sur sa localisation ne soit nécessaire.

Selon une réalisation particulière, l'information selon laquelle l'automate communicant est à proximité du terminal est obtenue par la réception d'un premier message envoyé par l'automate, le message étant envoyé lorsque le terminal est à portée d'une interface de communication de l'automate.

Un terminal selon l'invention est détecté par l'automate. Pour cela, le terminal peut émettre par le biais d'une interface de communication sans fil, un message de découverte du type décrit précédemment. Lorsqu'un tel message est intercepté par un automate à portée du réseau auquel est connectée l'interface de communication sans fil du terminal, celui-ci peut intercepter ce message. Un tel message comprend des indications permettant à un automate de se déclarer disponible auprès du terminal, comme par exemple un identifiant de communication du terminal tel qu'un numéro de téléphone, une adresse de contact SIP ou tout autre identifiant permettant à l'automate d'échanger des données avec le terminal. Le message émis par le terminal peut également comprendre un ou plusieurs critères de filtrage interdisant par exemple à un automate de signaler sa présence.

A l'étape 201, au moins une entrée relative à un automate communicant est insérée dans un carnet d'adresses du terminal, l'entrée comportant au moins l'information reçue à l'étape 200.

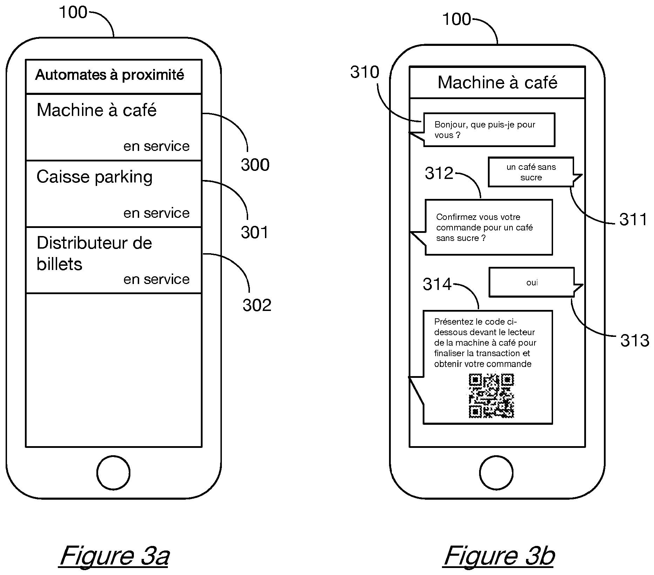

Le terminal 100 comprend une liste des automates détectés à proximité. La figure 3a représente, selon une réalisation particulière, un affichage d'une telle liste d'automates détectés sur l'écran du terminal 100. La liste comprend dans cet exemple trois entrées 300, 301 et 302 correspondant respectivement à une machine à café 300, une caisse de parking 301 et à un guichet automatique bancaire 302. Dans cet exemple, chacune des entrées comprend le nom de l'équipement et un statut indiquant sa disponibilité. Ces informations sont par exemple comprises dans l'information selon laquelle un automate communicant est à proximité, obtenue à l'étape 200. Chacune des entrées peut faire apparaitre différentes informations fournies par l'automate correspondant, comme par exemple une image, un message promotionnel, un délai d'attente ou toute autre information utile à la présentation du service proposé par l'automate.

Selon une réalisation particulière de l'invention, les entrées correspondant aux automates détectés sont insérées dans un carnet d'adresses du terminal. La liste représentée sur la figure 3a correspond alors à une vue d'un carnet d'adresses. De cette façon, les automates disponibles sont facilement accessibles à l'utilisateur.

Selon un mode particulier de réalisation, la réception de l'information selon laquelle au moins un automate communicant est à proximité du terminal provoque une notification sur le terminal.

De cette façon, l'utilisateur est averti lorsqu'un nouvel automate est à proximité et disponible pour une interaction. La notification peut par exemple être visuelle, vibratoire ou audio. Pour cela, le terminal dispose d'un dispositif de restitution audio, d'un écran ou d'un vibreur. Ainsi, lorsqu'un automate est détecté, une commande adaptée pour provoquer l'activation d'au moins un des dispositifs de notification du terminal est exécutée afin d'attirer l'attention de l'utilisateur du terminal.

Selon un mode particulier de réalisation, l'insertion dans le carnet d'adresses est conditionnée par au moins une règle de filtrage configurée au préalable.

L'utilisateur configure des règles de filtrage afin d'éviter que de trop nombreux automates ne soient insérés dans le carnet d'adresses ou dans la liste des automates détectés. Pour cela, le terminal comporte une interface de configuration au travers de laquelle l'utilisateur peut sélectionner des catégories d'automates devant être ou non insérées dans le carnet d'adresses. La configuration peut alors être mémorisée dans une mémoire du terminal ou une base de données. Par exemple, le terminal 100 peut être configuré pour ne pas insérer d'entrées correspondant à des distributeurs de friandises. Pour cela, le terminal 100 détermine le type de l'automate 101 à partir de l'information selon laquelle un automate est à proximité obtenue à l'étape 200 et compare ce type d'automate avec la configuration mémorisée, avant de déterminer si l'automate peut être inséré dans le carnet d'adresses ou la liste.

Selon une réalisation particulière, une règle de filtrage peut être déterminée à partir de données issues de capteurs du terminal, tels que par exemple une boussole, un accéléromètre ou un gyroscope. Ainsi, lorsque plusieurs automates communicants sont à proximité du terminal de l'utilisateur, l'invention permet par exemple de n'insérer dans la liste que les automates vers lesquels l'utilisateur oriente le terminal. Pour cela, le terminal obtient sa position et une direction à partir des données issues de capteurs. La position et la direction permettent de définir un secteur. Les automates qui ne sont pas localisés dans ce secteur sont alors ignorés et n'apparaissent pas dans la liste affichée sur l'écran du terminal. Selon un autre mode de réalisation, les données issues de tels capteurs sont utilisées pour mettre en évidence dans la liste des automates détectés, les automates pointés par le terminal. De cette façon, lorsque l'utilisateur se trouve par exemple dans une gare dans laquelle se trouvent plusieurs guichets automatiques, ce dernier peut désigner un guichet particulier en orientant son terminal vers ce guichet. La liste des automates à proximité est alors mise à jour de manière à mettre en évidence ou à ne conserver que l'automate désigné.

A l'étape 202, une l'entrée du carnet d'adresses est sélectionnée par l'utilisateur.

L'utilisateur peut sélectionner une entrée de la liste correspondant à un automate détecté à proximité, afin d'établir une communication avec l'automate. De préférence, il s'agit d'une communication établie selon un protocole de messagerie instantanée, tel qu'une communication SMS ou RCS (Rich Communication Suite). La sélection peut s'effectuer par contact sur un écran tactile du terminal ou à l'aide d'un dispositif de sélection adapté.

Lors de l'étape 203, au moins un message adapté pour initialiser une interaction entre le terminal et l'automate communicant est envoyé.

Un tel message peut être un message conforme à un protocole de messagerie instantanée comprenant une information selon laquelle le terminal souhaite initier une interaction avec l'automate. Selon une réalisation particulière, le message peut être un message selon un protocole de communication tel que TCP/IP et comprendre une indication relative au souhait du terminal d'initier une interaction. En réponse à un tel message, un automate peut émettre un message conforme à un protocole de messagerie instantanée invitant l'utilisateur du terminal à démarrer une interaction.

La figure 3b illustre le terminal 100 après que l'utilisateur ait sélectionné l'entrée 300 représentée sur la figure 3a. Sur l'écran du terminal sont affichés des messages échangés dans le cadre d'une interaction entre le terminal 100 et la machine à café 101. En réponse au message adapté pour initialiser une interaction entre le terminal et l'objet communicant émis par le terminal 100, la machine à café communicante 101 a envoyé un message 310 au terminal. Le message 310 invite l'utilisateur du terminal à passer une commande de boisson. Un tel message peut également comprendre des informations relatives aux différents choix qui s'offrent à l'utilisateur, à des promotions en cours ou une aide relative aux mots clefs et expressions que la machine à café peut interpréter. Selon une réalisation particulière, le message 310 comprend une information relative à l'état de fonctionnement de l'automate. Par exemple, une telle information peut concerner des plages horaires de fonctionnement, un état du stock. Cette information peut être par exemple affichée en association avec une entrée correspondant à un automate dans la liste des automates détectés à proximité.

Selon un mode de réalisation particulier, l'interaction entre le terminal et l'automate communicant est une transaction réalisée par l'intermédiaire d'un protocole de messagerie instantanée.

La transaction peut être une réservation, un achat, une location ou encore par exemple un paiement. Une transaction est une interaction particulière en ce qu'elle comporte une suite d'étapes qui font passer l'automate ou une base de données associée à l'automate d'un premier état antérieur à la transaction à un second état postérieur à la transaction. Une transaction entre le terminal 100 et la machine à café 101 est par exemple la commande d'une boisson réalisée à partir du terminal par un échange de messages entre le terminal et l'automate.

Par exemple les messages 311 à 314 représentés sur la figurent 3b permettent la réalisation d'une transaction concernant la commande d'un café.

De préférence, la transaction est mise en œuvre par l'échange de messages conformes à un protocole de messagerie instantanée, mais l'invention ne se limite pas à ces seuls échanges de messages instantanés. Selon une réalisation particulière, les messages sont des messages conformes à un protocole de transmission IP et comprennent des commandes vocales. De cette façon, un utilisateur du terminal peut interagir avec un automate en prononçant des commandes dans un microphone du terminal. Ces commandes peuvent ensuite être compressées et transmises à l'automate 100. Les réponses de l'automate peuvent également être transmises sous forme de données audio compressées ou de commandes vocales qui seront restituées au travers d'un haut-parleur du terminal. L'utilisateur peut alors interagir avec un automate en plaçant simplement son téléphone à l'oreille.

Selon un mode particulier de réalisation de l'invention, le procédé comprend en outre une étape 204 de confirmation de l'interaction par une action d'un utilisateur du terminal sur l'automate communicant.

Une action doit être effectuée sur l'automate afin de confirmer l'interaction ou la transaction en cours entre un terminal et un automate communicant. La confirmation autorise en particulier la livraison d'un produit ou d'un service objet de la transaction. Par exemple, la confirmation permet l'ouverture de barrières de parking, la livraison d'un produit acheté, la prise en compte d'une réservation. Par exemple, l'utilisateur peut devoir saisir sur l'automate une donnée de validation telle qu'un code de confirmation affiché sur le terminal. De cette façon, seule le détenteur du terminal peut obtenir un service ou un produit commandé par l'intermédiaire du procédé d'interaction. Pour cela, l'automate 101 peut générer une donnée de validation comme un numéro de commande ou un code, mémoriser cette donnée en association avec l'interaction en cours et/ou le terminal concerné, et transmettre cette donnée de validation au terminal 100 dans un message. Pour obtenir la commande, l'utilisateur du terminal 100 saisit la donnée de validation reçue sur une interface de l'automate 101. L'automate compare alors la donnée saisie avec les données générées et mémorisées précédemment. Lorsqu'une correspondance est trouvée, l'automate peut terminer la transaction et par exemple délivrer un produit commandé. Une telle disposition permet de sécuriser les transactions.

Selon un mode de réalisation particulier, l'étape de confirmation comprend l'échange d'une donnée de validation par lecture optique ou NFC.

La donnée de validation peut avantageusement être échangée avec le terminal via un canal de transmission de courte distance, tel que par exemple une transmission optique dans l'air. Par exemple, la donnée de validation peut être un code graphique tel qu'un code barre ou un code à deux dimensions. Le message 314 de la figure 3b illustre un code à deux dimensions. Pour confirmer la commande, le code graphique affiché sur le terminal est présenté devant un lecteur adapté de l'automate. Ainsi, l'interaction peut être confirmée de façon fiable et rapide. En variante, la donnée de validation peut être échangée par une interface de communication de type NFC (Near Field Communication). Pour cela, le terminal et l'automate comprennent un dispositif de communication NFC au travers desquels la donnée de validation est transmise lorsque les dispositifs sont à portée l'un de l'autre. De cette façon, le procédé sécurise la livraison par l'automate du produit ou du service.

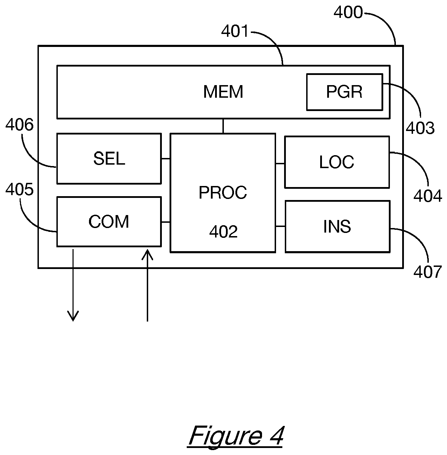

La figure 4 illustre, selon un mode particulier de réalisation de l'invention, un dispositif 400 mettant en œuvre le procédé d'interaction.

Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé d'interaction tel que décrit dans l'invention en référence à la figure 2, et notamment les étapes d'obtention d'une information selon laquelle l'automate communicant est à proximité du terminal, d'insertion, dans un carnet d'adresses du terminal, d'une entrée relative audit automate communicant comportant au moins ladite information obtenue, et d' envoi d'au moins un message adapté pour initialiser une interaction entre le terminal et l'automate communicant lorsque l'entrée du carnet d'adresses insérée est sélectionnée.

À l'initialisation, les instructions du programme d'ordinateur 403 sont par exemple chargées dans une mémoire RAM (Random Access Memory en anglais) avant d'être exécutées par le processeur de l'unité de traitement 402. Le processeur de l'unité de traitement 402 met en œuvre les étapes du procédé d'interaction selon les instructions du programme d'ordinateur 403.

Pour cela, outre la mémoire 401 et le processeur 402, le dispositif comprend un module 404 d'obtention adapté pour obtenir une information selon laquelle l'automate communicant est à proximité du terminal. Un tel module peut être mis en œuvre par un programme d'ordinateur comprenant des instructions aptes à être exécutées par un processeur et adaptées pour déterminer qu'un automate est à proximité. Le programme d'ordinateur peut comporter des instructions configurées pour recevoir, via un module de communication sans fil du terminal, un message de découverte en provenance d'un automate connecté à un même réseau sans fil que le terminal. Selon une réalisation particulière, le module de localisation comporte un composant de géolocalisation GPS adapté pour déterminer la position du terminal. Le module de localisation comporte alors des instructions de programme d'ordinateur pour transmettre la position du terminal à un serveur et recevoir, en provenance du serveur, une liste d'automates communicants à proximité.

Le dispositif 400 comprend également un module d'insertion 407, dans un carnet d'adresses du terminal, d'une entrée relative audit automate communicant comportant au moins ladite information reçue. Le module d'insertion peut être mis en œuvre par un programme d'ordinateur comportant des instructions pour insérer les données obtenues par le module de localisation, en particulier le nom d'un automate et un identifiant de communication, dans une base de données. L'insertion dans la base de données peut être réalisée par une requête conforme au langage SQL (Simple Query Language) configurée pour insérer dans une base de données de carnet d'adresses les informations relatives à l'automate détecté à proximité.

Le dispositif comprend également un module de sélection 406 d'une entrée correspondant à un automate détecté à proximité dans un carnet d'adresses ou une liste d'automates du terminal. La liste ou le carnet d'adresses sont par exemple mémorisées sous la forme d'une base de données du terminal. Le module de sélection comprend un afficheur adapté pour afficher les automates détectés et un dispositif de sélection adapté pour sélectionner une entrée particulière dans la liste ou le carnet d'adresses. Par exemple, il peut s'agir d'un écran tactile associé au terminal 100.

Enfin, le dispositif 400 comprend un module de communication 405 adapté pour envoyer au moins un message configuré pour initialiser une interaction entre le terminal et l'automate communicant lorsque l'entrée du carnet d'adresses insérée est sélectionnée. Un tel module peut être implémenté par un programme d'ordinateur comportant des instructions configurées pour émettre un premier message destiné à initier une interaction avec un automate sélectionné, le programme d'ordinateur étant exécuté par un processeur du dispositif.

Selon une réalisation particulière, le dispositif 400 comprend aussi un module de confirmation adapté pour échanger une donnée de validation avec un automate communicant. Le module de confirmation peut comporter un module d'affichage d'un code graphique destiné à être lu par un dispositif de lecture optique. Par exemple, le module de confirmation peut comporter un afficheur adapté pour afficher un code alphanumérique, un code barre ou un code à deux dimensions. Selon une réalisation particulière, le module de confirmation comporte un dispositif de communication NFC adapté pour émettre une donnée de validation. Le module de confirmation peut également comporter une interface de communication adaptée pour recevoir une donnée de validation envoyée par un automate communicant.

Le dispositif peut être intégré à un terminal, tel qu'un téléphone mobile de type smartphone, une tablette, une montre, un bracelet ou tout autre objet connecté, ou encore un ordinateur portable.

## Revendications

1. Procédé d'interaction entre un terminal mobile et un automate communicant, l'automate communicant comprenant un agent conversationnel adapté pour échanger des messages avec le terminal au travers d'une première interface de communication, le procédé étant **caractérisé en ce qu'**il comporte des étapes:
- d'obtention (200) d'une information selon laquelle l'automate communicant est à proximité du terminal,
- d'insertion (201), dans un carnet d'adresses du terminal, d'une entrée relative audit automate communicant comportant au moins ladite information obtenue, et
- d'envoi (203) d'au moins un message adapté pour initialiser une interaction entre le terminal et l'automate communicant lorsque l'entrée du carnet d'adresses insérée est sélectionnée (202).

2. Procédé selon la revendication 1 dans lequel l'insertion dans le carnet d'adresses est conditionnée par au moins une règle de filtrage configurée au préalable.

3. Procédé selon l'une quelconque des revendications précédentes dans lequel l'interaction entre le terminal et l'automate communicant est une transaction réalisée par l'intermédiaire d'un protocole de messagerie instantanée.

4. Procédé selon l'une quelconque des revendications précédentes comprenant en outre une étape de confirmation de l'interaction par une action d'un utilisateur du terminal sur l'automate communicant.

5. Procédé selon la revendication 4 dans lequel l'étape de confirmation comprend l'échange d'une donnée de validation par lecture optique ou NFC.

6. Procédé selon l'une quelconque des revendications précédentes dans lequel l'information selon laquelle l'automate communicant est à proximité du terminal est obtenue par une détection des équipements à portée d'une interface de communication du terminal.

7. Procédé selon l'une quelconque des revendications précédentes dans lequel l'information selon laquelle l'automate communicant est à proximité du terminal est obtenue par la réception d'un premier message envoyé par l'automate, le message étant envoyé lorsque le terminal est à portée d'une interface de communication de l'automate.

8. Procédé selon l'une quelconque des revendications précédentes dans lequel la réception d'une information selon laquelle au moins un automate communicant est à proximité du terminal provoque une notification sur le terminal.

9. Dispositif d'interaction entre un terminal mobile et un automate communicant, l'automate communicant comprenant un agent conversationnel adapté pour échanger des messages avec le dispositif au travers d'une première interface de communication, le dispositif étant tel qu'il comporte :
- un module (404) d'obtention adapté pour obtenir une information selon laquelle l'automate communicant est à proximité du terminal,
- un module (407) d'insertion, dans un carnet d'adresses du terminal, d'une entrée relative audit automate communicant comportant au moins ladite information reçue, et
- un module (405) de communication configuré pour envoyer au moins un message adapté pour initialiser une interaction entre le terminal et l'automate communicant lorsque l'entrée du carnet d'adresses insérée est sélectionnée.

10. Terminal comportant un dispositif d'interaction selon la revendication 9.

11. Programme d'ordinateur comportant des instructions pour l'exécution du procédé d'interaction selon l'une quelconque des revendications 1 à 8, lorsque le programme est exécuté par un processeur.

12. Support d'informations lisible par un ordinateur sur lequel est enregistré un programme d'ordinateur comprenant des instructions pour l'exécution des étapes du procédé d'interaction selon l'une des revendications 1 à 8.

## Patentansprüche

1. Verfahren zur Interaktion zwischen einem mobilen Endgerät und einem kommunizierenden Automaten, wobei der kommunizierende Automat einen Konversationsagenten umfasst, der geeignet ist, Nachrichten mit dem Endgerät über eine erste Kommunikationsschnittstelle auszutauschen, wobei das Verfahren **dadurch gekennzeichnet ist, dass** es folgende Schritte aufweist:
- Beziehen (200) einer Information, gemäß welcher sich der kommunizierende Automat in der Nähe des Endgeräts befindet,
- Einfügen (201), in ein Adressbuch des Endgeräts, eines Eintrags bezogen auf den kommunizierenden Automaten, der wenigstens die bezogene Information aufweist, und
- Senden (203) mindestens einer Nachricht, die geeignet ist, eine Interaktion zwischen dem Endgerät und dem kommunizierenden Automaten einzuleiten, wenn der eingefügte Eintrag des Adressbuchs auswählt wird (202).

2. Verfahren nach Anspruch 1, wobei das Einfügen in das Adressbuch von mindestens einer zuvor konfigurierten Filterregel abhängig ist.

3. Verfahren nach einem der vorhergehenden Ansprüche, wobei die Interaktion zwischen dem Endgerät und dem kommunizierenden Automaten eine Transaktion ist, die mittels eines Sofortnachrichten-Protokolls vorgenommen wird.

4. Verfahren nach einem der vorhergehenden Ansprüche, ferner umfassend einen Schritt des Bestätigens der Interaktion durch eine Aktion eines Benutzers des Endgeräts an dem kommunizierenden Automaten.

5. Verfahren nach Anspruch 4, wobei der Schritt des Bestätigens das Austauschen eines Validationsdatenelements durch optisches Lesen oder NFC umfasst.

6. Verfahren nach einem der vorhergehenden Ansprüche, wobei die Information, gemäß welcher sich der kommunizierende Automat in der Nähe des Endgeräts befindet, durch einer Detektion der Geräte in Reichweite einer Kommunikationsschnittstelle des Endgeräts bezogen wird.

7. Verfahren nach einem der vorhergehenden Ansprüche, wobei die Information, gemäß welcher sich der kommunizierende Automat in der Nähe des Endgeräts befindet, durch den Empfang einer ersten Nachricht bezogen wird, die vom Automaten gesendet wird, wobei die Nachricht gesendet wird, wenn sich das Endgerät in Reichweite einer Kommunikationsschnittstelle des Automaten befindet.

8. Verfahren nach einem der vorhergehenden Ansprüche, wobei der Empfang einer Information, gemäß welcher sich mindestens ein kommunizierender Automat in der Nähe des Endgeräts befindet, eine Benachrichtigung auf dem Endgerät verursacht.

9. Vorrichtung zur Interaktion zwischen einem mobilen Endgerät und einem kommunizierenden Automaten, wobei der kommunizierende Automat einen Konversationsagenten umfasst, der geeignet ist, Nachrichten mit der Vorrichtung über eine erste Kommunikationsschnittstelle auszutauschen, wobei die Vorrichtung so beschaffen ist, dass sie Folgendes aufweist:
- ein Bezugsmodul (404), das geeignet ist, eine Information zu beziehen, gemäß welcher sich der kommunizierende Automat in der Nähe des Endgeräts befindet,
- ein Modul (407) zum Einfügen, in ein Adressbuch des Endgeräts, eines Eintrags bezogen auf den kommunizierenden Automaten, der wenigstens die empfangene Information aufweist, und
- ein Kommunikationsmodul (405), das dazu ausgebildet ist, mindestens eine Nachricht zu senden, die geeignet ist, eine Interaktion zwischen dem Endgerät und dem kommunizierenden Automaten einzuleiten, wenn der eingefügte Eintrag des Adressbuchs auswählt wird.

10. Endgerät aufweisend eine Interaktionsvorrichtung nach Anspruch 9.

11. Computerprogramm aufweisend Anweisungen für die Ausführung des Interaktionsverfahrens nach einem der Ansprüche 1 bis 8, wenn das Programm von einem Prozessor ausgeführt wird.

12. Computerlesbares Speichermedium, auf dem ein Computerprogramm gespeichert ist, das Anweisungen für die Ausführung der Schritte des Interaktionsverfahrens nach einem der Ansprüche 1 bis 8 umfasst.

## Claims

1. Method for interaction between a mobile terminal and a communicating automatic machine, the communicating automatic machine comprising a conversational agent suitable for exchanging messages with the terminal through a first communication interface, the method being **characterized in that** it comprises steps:
- of obtaining (200) of an item of information according to which the communicating automatic machine is in proximity to the terminal,
- of insertion (201), in an address book of the terminal, of an entry relating to said communicating automatic machine comprising at least said item of information obtained, and
- of sending (203) of at least one message suitable for initializing an interaction between the terminal and the communicating automatic machine when the entry in the address book inserted is selected (202).

2. Method according to Claim 1, wherein the insertion into the address book is conditioned by at least one filtering rule configured previously.

3. Method according to either one of the preceding claims, wherein the interaction between the terminal and the communicating automatic machine is a transaction performed via an instant messaging protocol.

4. Method according to any one of the preceding claims, further comprising a step of confirmation of the interaction by an action of a user of the terminal on the communicating automatic machine.

5. Method according to Claim 4, wherein the confirmation step comprises the exchange of a validation datum by optical reading or NFC.

6. Method according to any one of the preceding claims, wherein the item of information according to which the communicating automatic machine is in proximity to the terminal is obtained by a detection of the equipment within range of a communication interface of the terminal.

7. Method according to any one of the preceding claims, wherein the item of information according to which the communicating automatic machine is in proximity to the terminal is obtained by the reception of a first message sent by the automatic machine, the message being sent when the terminal is within range of a communication interface of the automatic machine.

8. Method according to any one of the preceding claims, wherein the reception of an item of information according to which at least one communicating automatic machine is in proximity to the terminal provokes a notification on the terminal.

9. Device for interaction between a mobile terminal and a communicating automatic machine, the communicating automatic machine comprising a conversational agent suitable for exchanging messages with the device through a first communication interface, the device being such that it comprises:
- an obtaining module (404) suitable for obtaining an item of information according to which the communicating automatic machine is in proximity to the terminal,
- a module (407) for inserting, into an address book of the terminal, an entry relating to said communicating automatic machine comprising at least said item of information received, and
- a communication module (405) configured to send at least one message suitable for initializing an interaction between the terminal and the communicating automatic machine when the entry in the address book inserted is selected.

10. Terminal comprising an interaction device according to Claim 9.

11. Computer program comprising instructions for the execution of the interaction method according to any one of Claims 1 to 8, when the program is run by a processor.

12. Computer-readable information medium on which is stored a computer program comprising instructions for the execution of the steps of the interaction method according to one of Claims 1 to 8.
